# EUROPÄISCHE PATENTSCHRIFT

(11) **EP 2 229 994 B1**
(45) Veröffentlichungstag und Bekanntmachung des Hinweises auf die Patenterteilung: **21.12.2011**
(21) Anmeldenummer: 10155972.2
(22) Anmeldetag: 09.03.2010
(51) Int. Cl.: B01D 46/00, F16J 15/06

(54) **Dichtungskomponente mit elektronischer Komponente**
Seal components with electronic components
Composants d'étanchéité dotés de composants électroniques

(30) Priorität: 13.03.2009 DE 102009013003
(43) Veröffentlichungstag der Anmeldung: 22.09.2010
(73) Patentinhaber: KNORR-BREMSE Systeme für Nutzfahrzeuge GmbH, 80809 München (DE)
(72) Erfinder: Reifinger, Günther, 82110, Germering (DE); Eidenschink, Rainer, 81927, München (DE)
(74) Vertreter: Schönmann, Kurt

(56) Entgegenhaltungen:
- EP-A1- 1 844 834
- EP-A1- 1 913 989
- EP-A1- 1 985 351
- WO-A1-2010/082945
- DE-A1-102007 035 550
- US-A1- 2001 042 707
- US-A1- 2007 012 117

## Beschreibung

Die Erfindung betrifft eine Dichtungskomponente, insbesondere eine Dichtungskomponente einer Filterpatrone, insbesondere einer Luftfilterpatrone für eine Luftaufbereitungsanlage, wobei die Dichtungskomponente einen Dichtungskörper umfasst, der eine erste Dichtungsfläche zum Abdichten eines abzudichtenden Volumens aufweist.

Die Erfindung betrifft auch eine Dichtungsanordnung.

Darüber hinaus betrifft die Erfindung ein Betriebsverfahren für eine Dichtungskomponente.

Außerdem betrifft die Erfindung ein erstes Herstellungsverfahren für eine Dichtungskomponente, insbesondere für eine Dichtungskomponente einer Luftfilterpatrone.

Des Weiteren betrifft die Erfindung ein zweites Herstellungsverfahren für eine Dichtungskomponente, insbesondere für eine Dichtungskomponente einer Luftfilterpatrone.

Die EP 1 913 989 A1 beschreibt einen Dichtungsring, der eine Gehäusekappe von einem Gehäuseboden trennt und dazu benutzt wird, Signale aus dem Gehäuseinneren nach außen zu führen. Dazu kann der Dichtungsring einen Kanal aufweisen, in welchem Leitungsdrähte angeordnet sind.

Die US 2001/042707 A1 beschreibt eine Filtervorrichtung mit einem Kennungschip, der in einem ringförmigen Dichtmittel eingebettet sein kann und mit einer Aufnahmevorrichtung in dem Gehäuse der Filtervorrichtung zusammenwirkt, um einen Informationsaustausch zwischen dem Mikroschaltkreis und der Aufnahmevorrichtung zu ermöglichen.

US 2007/012117 A1 beschreibt eine Querschnittsansicht eines Dichtungsrings zur Abdichtung zwischen einem Behälter und einem Deckel einer Vakuumkammer. Der Dichtungsring ist in eine Nut am Rand des Behälters eingelegt. In dem Dichtungsring ist ein dünner scheibchenförmiger Chip eingebettet. Eine Leitung ist von dem Chip durch die Nut und einen Leitungskanal aus dem Behälter herausgeführt. Es wird vorgeschlagen, einen Drucksensor zwischen zwei Dichtungsflächen des Dichtungsrings einzubetten, wobei jede der beiden Dichtungsflächen eine Abdichtung zu einem anderen der beiden Teile herstellt, zwischen denen der Dichtungsring eine Abdichtung herstellen soll.

EP 1 985 351 A1 beschreibt eine Filtereinrichtung mit einem Filtergehäuse und einem Filtereinsatz. Ein Transponder ist an dem Filtereinsatz befestigt und ein Lesegerät zum Auslesen des Transponders ist außerhalb der Filtereinheit in dem Filtergehäuse befestigt.

EP 1 844 834 A1 beschreibt ein Filtersystem mit einem Filterelement, einer Dichtung und einem Gehäuse. Auf einer Innenseite des Gehäuses sind mindestens zwei Leitungen angebracht, um die Dichtung, welche ein leitfähiges Material aufweist, mit einem Schaltkreis zu verbinden.

Die nachveröffentlichte WO 2010/082945 A1 beschreibt einen Dichtungsring, der einen RFID-Transponder aufweist.

DE 10 2007 035 550 A1 beschreibt ein Dichtungselement für ein Lager. Das Dichtungselement umfasst einen Korpus, innerhalb dessen ein RFID-Chip mit einer Antenne angeordnet ist.

Bei einem Austausch einer in einem Nutzfahrzeug an einer Luftaufbereitungsanlage angebrachten Luftfilterpatrone ist darauf zu achten, dass eine Luftfilterpatrone verwendet wird, die zu der Luftaufbereitungsanlage des Nutzfahrzeugs passt. Nur so kann ein fehlerfreier Betrieb der Luftaufbereitungsanlage und des Nutzfahrzeugs gewährleistet werden. Weil die Luftaufbereitungsanlage die Bremsanlage und andere sicherheitsrelevante Fahrzeugsysteme mit Druckluft versorgt, kann eine Verwendung einer nicht passenden Luftfilterpatrone unter Umständen sogar die Verkehrssicherheit beeinträchtigen. Ein Einbau einer unpassenden Luftfilterpatrone ist bei konventionellen Luftaufbereitungsanlagen häufig schon deshalb nicht von vorneherein ausgeschlossen, weil die meisten Gewinde zum Befestigen, d.h. zum Aufschrauben von Luftfilterpatronen, standardisiert sind. Somit können selbst solche Filterpatronen stark unterschiedliche Trocknungs- und/oder Reinigungsleistungen haben, die identischen Gewindemaße aufweisen.

Es ist eine Aufgabe der vorliegenden Erfindung, eine technische Lösung anzugeben, mit der sichergestellt werden kann, dass für Luftaufbereitungsanlagen Filterpatronen verwendet werden, die zu der jeweiligen Luftaufbereitungsanlage passen.

Diese Aufgabe wird mit den Merkmalen der unabhängigen Ansprüche gelöst. Vorteilhafte Ausgestaltungen und Weiterbildungen der Erfindungen ergeben sich aus den abhängigen Ansprüchen.

Die vorliegende Erfindung baut auf einer gattungsgemäßen Dichtungskomponente dadurch auf, dass der Dichtungskörper eine elektronische Komponente zumindest teilweise umschließt, insbesondere zumindest teilweise formschlüssig umschließt. Die von dem Dichtungskörper zumindest teilweise umschlossene elektronische Komponente kann einen filtertypspezifischen Schaltungsaufbau und/oder eine filtertypspezifische Funktionalität und/oder einen filtertypspezifischen Speicherinhalt aufweisen, der mittels einer elektrischen, magnetischen oder elektromagnetischen Signalübertragung abgefragt und ausgewertet werden kann. Anhand eines filtertypspezifischen elektrischen Verhaltens der elektronischen Komponente und somit auch der Dichtungskomponente und des Dichtungskörpers kann eine Steuerung der Luftaufbereitungsanlage ermitteln, ob und ggf. welcher Typ von Luftfilter in die Luftaufbereitungsanlage eingesetzt wurde. Dadurch, dass die elektronische Komponente zumindest teilweise von dem Dichtungskörper umschlossen ist, wird es dem Anwender erschwert, die elektronische Komponente von einer verbrauchten Luftfilterpatrone beschädigungslos zu entfernen und an der Luftbereitungsanlage zusammen mit einer für die Luftaufbereitungsanlage unpassenden Luftfilterpatrone zu betreiben.

Vorzugsweise weist die elektronische Komponente eine Schnittstellenkomponente auf, die dazu vorgesehen ist, ein Signal von und/oder zu einer außerhalb der Dichtungskomponente angeordneten Vorrichtung zu übertragen. Damit ist es möglich, den Typ der verwendeten Filterpatrone zu überprüfen, während die elektronische Komponente im Dichtungskörper verbleibt.

Ebenfalls ist bevorzugt, wenn ausgehend von der elektronischen Komponente mindestens eine elektrische Verbindung zu einer elektrisch leitenden Kontaktfläche in einer Oberfläche des Dichtungskörpers herausgeführt ist, insbesondere wobei die Kontaktfläche in der Oberfläche des Dichtungskörpers vertieft angeordnet ist. Durch diese Maßnahme kann zu (und/oder zu) einer Steuerung der Luftbereitungsanlage eine elektrische Leitungsverbindung hergestellt werden, ohne auf möglicherweise anfälligere und/oder aufwändigere drahtlose Übertragungstechniken zurückgreifen zu müssen.

Vorzugsweise weist der Dichtungskörper eine zweite Dichtungsfläche auf, die dazu vorgesehen ist, einen Raum abzudichten, in welchem die Kontaktfläche angeordnet ist. Hierdurch kann verhindert werden, dass Umwelteinflüsse wie Feuchtigkeit und Staub eine Funktion der Kontaktfläche beeinflussen.

Ebenso ist es auch möglich, dass die erste Dichtungsfläche die zweite Dichtungsfläche umfasst. Damit sind beide Dichtungsflächen in einem oder mehreren gemeinsamen Arbeitsgängen herstellbar, wodurch die Herstellung vereinfacht wird.

Vorteilhaft kann es auch sein, wenn die zweite Dichtungsfläche und/oder die elektronische Komponente und/oder die Schnittstellenvorrichtung vollständig in dem abzudichtenden Volumen angeordnet ist. Durch diese Maßnahme sind die zweite Dichtungsfläche und/oder die elektronische Komponente und/oder die Schnittstellenvorrichtung gegenüber Umwelteinflüssen schützbar.

Auch kann vorgesehen sein, dass die zweite Dichtungsfläche und/oder die elektronische Komponente und/oder die Schnittstellenvorrichtung nicht oder nur teilweise in dem abzudichtenden Volumen angeordnet ist. So können Anschlüsse und/oder Sensoren der elektronischen Komponente im Außenbereich der Filteranordnung angeordnet werden.

Außerdem kann die elektronische Komponente mit einem Strukturteil elektrisch verbunden und/oder an einem Strukturteil mechanisch befestigt sein, wobei der Dichtungskörper das Strukturteil zumindest teilweise formschlüssig umschließt, insbesondere wobei das Strukturteil ein leitfähiges Stanzbiegeteil und/oder ein Stützkörper ist. Mit dem Strukturteil kann die elektronische Komponente während eines Vulkanisierens des Dichtungskörpers positioniert werden. Außerdem kann das Strukturteil eine mechanische Eigenschaft der Dichtungskomponente verbessern.

Darüber hinaus kann vorgesehen sein, dass die Dichtungskomponente eine Feder umfasst, die dazu vorgesehen ist, eine Kontaktfläche der Schnittstellenvorrichtung gegen einen Gegenkontakt einer Dichtungsgegenfläche zu drücken, insbesondere wobei der Stützkörper die Feder umfasst und/oder wobei die Feder die Kontaktfläche umfasst. Hierdurch ist es trotz Fertigungstoleranzen möglich, im Bereich der Dichtungsfläche eine zuverlässige, trennbare elektrische Verbindung bereitzustellen.

Ferner ist es möglich, dass der Dichtungskörper die Schnittstellenkomponente zumindest teilweise oder vollständig umschließt, insbesondere zumindest teilweise oder vollständig formschlüssig umschließt. Hierdurch kann der Aufwand für eine separate Befestigung der Schnittstellenkomponente eingespart werden.

Die elektronische Komponente kann einen Sensor aufweisen, der dazu geeignet und/oder vorgesehen ist, eine erste physikalische Messgröße zu erfassen sowie eine zweite physikalische Größe bereitzustellen, wobei die zweite physikalische Größe ein Maß für die erste physikalische Messgröße ist, wobei die zweite physikalische Größe insbesondere eine elektrische oder magnetische Größe und/oder ein elektrisches oder magnetisches Signal ist. Der Filterwechsel soll weder zu früh, noch zu spät erfolgen. Zu frühe und somit unnötige Wechsel erhöhen Betriebskosten. Zu späte Wechsel führen aufgrund erhöhter Druckverluste ebenfalls zu erhöhten Betriebskosten. Im schlimmsten Fall verursacht ein verspäteter Wechsel eine Beschädigung der Bremsanlage durch Wasser und/oder Öle. Mittels des Sensors können einer Steuerung der Luftaufbereitungsanlage Messwerte zur Überwachung dichtungsnaher und somit luftfilternaher Umweltbedingungen wie Temperaturverläufe zugeführt werden, aufgrund derer die Steuerung der Luftaufbereitungsanlage eine Belastung und/oder einen Abnutzungsverlauf und einen optimalen Austauschzeitpunkt für das Filter ermitteln kann.

Bevorzugt ist auch, wenn die elektronische Komponente einen nichtflüchtigen und/oder programmierbaren und/oder irreversiblen elektrischen Speicher und/oder eine Verschlüsselungsvorrichtung und/oder eine Frage-Antwort-Vorrichtung und/oder eine Chipkartenkomponente, insbesondere einen Chipkartenchip und/oder einen Transponder aufweist. Eine solche elektronische Komponente ermöglicht eine typspezifische, fertigungslosspezifische und/oder individuelle elektronische Kennzeichnung und/oder Identifizierung der Dichtungskomponente.

Die vorliegende Erfindung baut auf einer gattungsgemäßen Dichtungsanordnung dadurch auf, dass die Dichtungsanordnung eine erfindungsgemäße Dichtungskomponente sowie ein Gegenstück zu der Dichtungskomponente umfasst, wobei die Dichtungsanordnung einen geschlossenen und einen nicht geschlossenen Zustand einnehmen kann, wobei in dem geschlossenen Zustand die Kontaktfläche der Dichtungskomponente eine Kontaktfläche des Gegenstücks kontaktiert.

Die vorliegende Erfindung baut auf dem gattungsgemäßen Betriebsverfahren dadurch auf, dass das Betriebsverfahren folgende Schritte umfasst: Bereitstellen einer erfindungsgemäßen Dichtungskomponente, Ändern einer Information in einem elektronischen Speicher der Dichtungskomponente, Abfragen der Information aus dem elektronischen Speicher der Dichtungskomponente, Auswerten der abgefragten Information und Durchführen einer Aktion in Abhängigkeit und/oder unter Berücksichtigung eines Auswertungsergebnisses der Auswertung der abgefragten Information. Mittels dieses Betriebsverfahrens kann eine Steuerung einer Luftaufbereitungsanlage eine Identität, ein Alter und/oder eine andere Eigenschaft der Dichtungskomponente ermitteln.

Auf dem ersten gattungsgemäßen Herstellungsverfahren baut die Erfindung dadurch auf, dass das Herstellungsverfahren folgende Schritte umfasst: Bereitstellen eines Dichtungsträgers, der einen Aufnahmebereich für einen Dichtungskörper aufweist, Anordnen einer elektronischen Komponente in dem Aufnahmebereich für den Dichtungskörper und Aufvulkanisieren des Dichtungskörpers auf oder in den Aufnahmebereich für den Dichtungskörper. Hierdurch wird die elektronische Komponente mit dem Dichtungsträger und dem Dichtungskörper fest verbunden, so dass die elektronische Komponente von dem Dichtungsträger und dem Dichtungskörper allenfalls mit so großem Aufwand getrennt werden kann, dass der Anwender davon absieht.

Auf dem zweiten gattungsgemäßen Herstellungsverfahren baut die Erfindung dadurch auf, dass das Herstellungsverfahren folgende Schritte umfasst: Anordnen einer elektronischen Komponente auf einer Stützkomponente, Aufvulkanisieren eines Dichtungskörpers auf die Stützkomponente und die elektronische Komponente, Bereitstellen eines Dichtungsträgers, der einen Befestigungsbereich für den Dichtungskörper aufweist und Verbinden des Dichtungskörpers und/oder der Stützkomponente mit dem Befestigungsbereich des Dichtungsträgers. Es kann fertigungstechnisch weniger aufwendig sein, zunächst eine Dichtungskomponente mit der einvulkanisierten elektronischen Komponente herzustellen und erst dann die Dichtungskomponente mit dem Dichtungsträger zu verbinden. Die Dichtungskomponente und die Aufnahme für die Dichtungskomponente am Dichtungsträger können im Querschnitt widerhakenartige Schultern aufweisen, mit denen ein Herausziehen der Dichtungskomponente aus der Aufnahme für die Dichtungskomponente verhindert wird.

Die Erfindung wird nun mit Bezug auf die begleitende Zeichnung anhand besonders bevorzugter Ausführungsformen beispielhaft erläutert.

Es zeigen:
- Fig. 1: einen nicht maßstäblichen Querschnitt durch eine erste Ausfüh- rungsform einer erfindungsgemäßen Dichtungsanordnung;
- Fig. 2: einen nicht maßstäblichen Querschnitt durch eine andere Dichtungsanordnung;

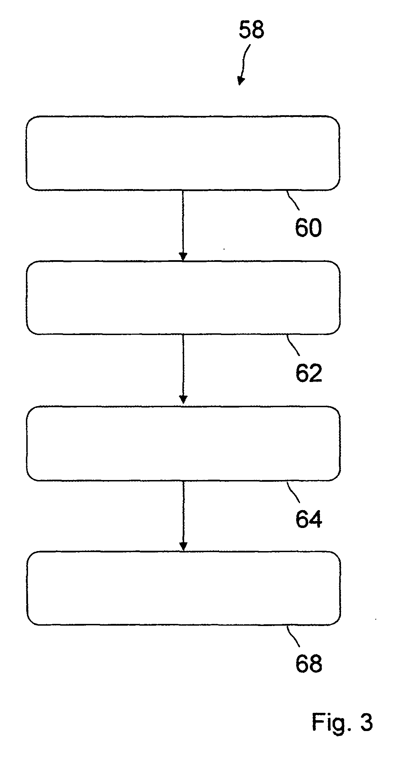

- Fig. 3: einen Ablauf eines ersten erfindungsgemäßen Herstellungsver- fahrens für eine erfindungsgemäße Dichtungsanordnung; und

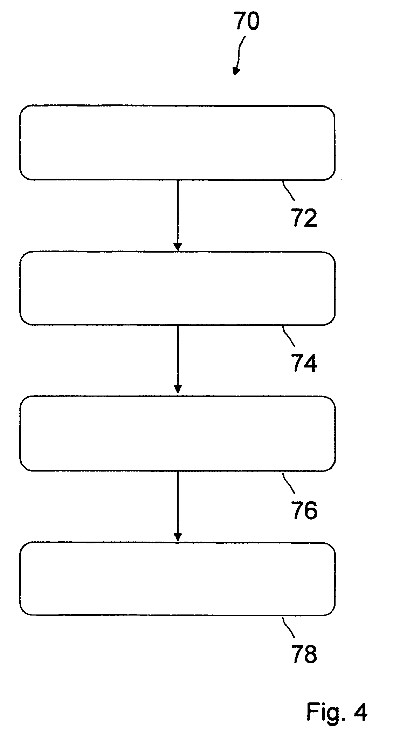

- Fig. 4: einen Ablauf eines zweiten erfindungsgemäßen Herstellungs- verfahrens für eine erfindungsgemäße Dichtungsanordnung.

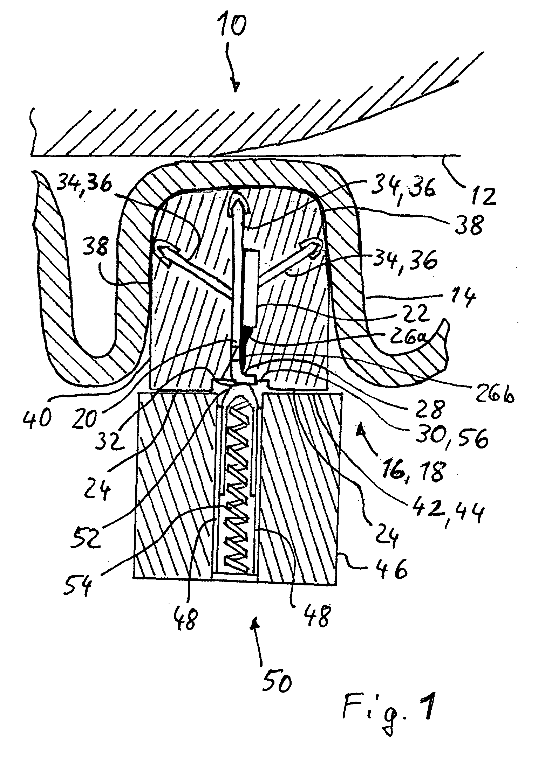

Fig. 1 zeigt einen nicht maßstäblichen Querschnitt durch eine erste Ausführungsform einer erfindungsgemäßen Dichtungsanordnung 10. Unterhalb einer Abdeckung 12 ist ein Formblech 14 mit einer ringförmig umlaufenden Befestigungsnut 16 für eine Dichtungskomponente 18 angeordnet. In der Befestigungsnut 16 befindet sich ein Stanzbiegeteil 20, auf dem eine elektronische Komponente 22 mechanisch befestigt ist. Das Stanzbiegeteil 20 kann sich (senkrecht zur Zeichenebene) entlang eines oder mehrerer Umfangsabschnitte einer Dichtungsfläche 24 oder sogar über eine gesamte Umfangslänge der Dichtungsfläche 24 erstrecken. Im letzteren Fall weist das Stanzbiegeteil 20 eine im Wesentlichen ringförmige Grundform auf. Typischerweise weist die elektronische Komponente 22 mindestens zwei elektrische Anschlüsse 26 auf, von denen einer mit dem Stanzbiegeteil 20 elektrisch verbunden ist. Ein laschenartig umgebogenes Teil 28, welches elektrisch isoliert mit dem Stanzbiegeteil 20 verbunden ist im Bereich der Dichtungsfläche 24, also auf oder in einer Außenseite 30 der Dichtungskomponente 18 als Kontaktfläche 32 angeordnet. Von dem Stanzbiegeteil 20 sind mehrere durch Stanzen geformte Fortsätze 34 stachelartig abgespreizt. Die leitenden Teile 36 der Fortsätze 34 sind bis an die jeweiligen Außenseiten 30 der Dichtungskomponente 18 herausgeführt, um eine leitende Masseanbindung über das Formblech 14 zu gewährleisten. Der Dichtungskörper 40 besteht überwiegend aus einer Dichtungsmasse, die die Befestigungsnut 16 ausfüllt und die elektronische Komponente 22 und das Stanzbiegeteil 20 mit Ausnahme der Kontaktfläche 32 umhüllt. Die auswechselbare Filterpatrone umfasst das Formblech 14 und ein (nicht dargestelltes) verschleißbehaftetes Filterteil, welches mit dem Formblech 14 fest verbunden ist. Die Dichtungsgegenfläche 42 zur Dichtungsfläche 24 wird mittels einer Außenfläche 44 eines Formkörpers 46 bereitgestellt. In dem Formkörper 46 ist eine Außenröhre 48 eines federbetriebenen Springkontaktstifts 50 befestigt. Der Formkörper 46 ist in einer (nicht dargestellten) Luftaufbereitungsanlage so angeordnet, dass nach dem Einsetzen der Filterpatrone eine Kontaktfläche 52 des Springkontaktstifts 50 mittels einer Feder 54 des Springkontaktstifts 50 gegen die Kontaktfläche 32 des Stanzbiegeteils 20 gedrückt wird. Von dem Springkontaktstift 50 führt eine (nicht dargestellte) elektrische Leitung zu einer Steuerung einer Luftaufbereitungsanlage. Ein (nicht dargestellter) zweiter Anschluss der elektronischen Komponente 22 kann mit einem zweiten gleichartigen Stanzbiegeteil und einem (nicht dargestellten) zweiten gleichartigen Springkontaktstift verbunden sein. Vorzugsweise weist der Dichtungskörper 40 im Bereich der Kontaktfläche 32 des Stanzbiegeteils 20 eine Ausnehmung 56 auf, um beim Einsetzen der Luftfilterpatrone die Abdichtung zu gewährleisten und/oder eine Verletzungsgefahr zu minimieren und/oder um die Kontaktlasche 28, welche elektrisch isoliert mit dem Stanzbiegeteil 20 verbunden ist, gegen mechanische Beschädigungen zu schützen und/oder damit die Dichtungsgegenfläche 42 beim Einsetzen der Filterpatrone nicht durch die Kontaktlasche 28 beschädigt wird. Der Formkörper 46 mit der Dichtungsgegenfläche 42 kann aus einem nichtleitenden oder aus einem leitenden Material bestehen. Falls er aus einem leitenden Material besteht, ist er gegenüber einer Fahrzeugmasse elektrisch isoliert zu befestigen, sofern die betreffende Springkontaktverbindung nicht ohnehin als Masseverbindung zu der elektronischen Komponente 22 vorgesehen ist.

Die Dichtungskomponente 18 kann mittels folgender erster Abfolge 58 von Herstellungsschritten hergestellt werden. In einem ersten Schritt 60 wird als Dichtungsträger 18 ein Formblech 14 bereitgestellt, das eine Befestigungsnut 16 für einen Dichtungskörper 40 aufweist. In einem zweiten Schritt 62 wird eine elektronische Komponente 22 auf mindestens einem Stanzbiegeteil 20 befestigt und mit diesem elektrisch verbunden. In einem dritten Schritt 64 wird das Stanzbiegeteil 20 mit der elektronischen Komponente 22 und elektrisch isoliert mit der Kontaktlasche 28 verbunden und in der Befestigungsnut 16 für den Dichtungskörper 40 angeordnet. In einem vierten Schritt 68 wird der Dichtungskörper 40 in die Befestigungsnut 16 vulkanisiert und dabei das Stanzbiegeteil 20 mit der darauf befestigten elektronischen Komponente 22 von einem nichtleitenden Werkstoff des Dichtungskörpers 40 umhüllt. Alternativ kann die Dichtungskomponente 18 mittels folgender zweiter Abfolge 70 von Herstellungsschritten hergestellt werden. In einem ersten Schritt 72 wird eine elektronische Komponente 22 auf mindestens einem Stanzbiegeteil 20 befestigt und mit diesem elektrisch verbunden. In einem zweiten Schritt 74 wird ein Dichtungskörper 40 auf das Stanzbiegeteil 20 mit der elektronischen Komponente 22 aufvulkanisiert. In einem dritten Schritt 76 wird als Dichtungsträger 14 ein Formblech 14 bereitgestellt, das einen Befestigungsbereich 16 für den Dichtungskörper 40 aufweist. In einem vierten Schritt 78 wird der Dichtungskörper 40 und/oder das Stanzbiegeteil 20 an oder in der Befestigungsnut 16 mechanisch befestigt. Hierfür können im Querschnitt des Dichtungskörpers 40 und/oder im Querschnitt der Befestigungsnut 16 (nicht dargestellte) widerhakenartige Flanken ausgebildet sein, die eine Entnahme eines in die Befestigungsnut 16 schnappverschlussartig eingesetzten Dichtungskörpers 40 aus der Befestigungsnut 16 dauerhaft verhindern. Alternativ oder zusätzlich kann der Dichtungskörper 40 beim Einsetzen in die Befestigungsnut 16 mittels eines Klebers eingeklebt werden.

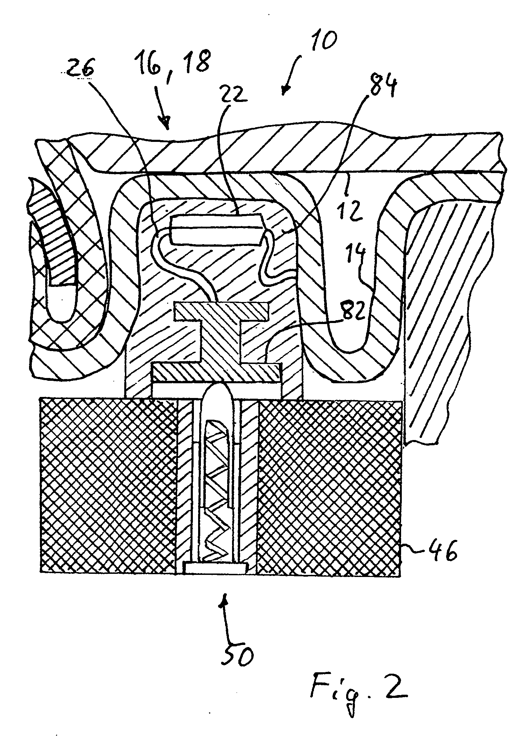

Fig. 2 zeigt einen nicht maßstäblichen Querschnitt durch eine weitere Dichtungsanordnung 80. Hierbei ist eine elektronische Komponente 22 auf einer ringförmigen Leiterplatte befestigt. Die ringförmige Leiterplatte ist mit einem Kontaktring 82 verbunden und mit einer Dichtungsmasse 84, beispielsweise einem Kunststoff, umhüllt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Dichtungsanordnung
- 12: Abdeckung, Filterdeckel
- 14: Formblech, Formteil, Dichtungsträger
- 16: Befestigungsnut
- 18: Dichtungskomponente
- 20: Stanzbiegeteil
- 22: elektronische Komponente
- 24: Dichtungsfläche
- 26: elektrischer Anschluss (Bezugszeichen 26a, 26b)
- 28: umgebogener Teil des Stanzbiegeteils 20
- 30: Außenseite der Dichtungskomponente 18
- 32: Kontaktfläche des Stanzbiegeteils 20
- 34: Fortsatz des Stanzbiegeteils 20
- 36: leitendes Teil des Fortsatzes 34
- 40: Dichtungskörper
- 42: Dichtungsgegenfläche
- 44: Außenfläche des ersten Formkörpers 46
- 46: Formkörper; Gegenstück zu Dichtungskomponente 18
- 48: Außenröhre des federbetriebenen Springkontaktstifts
- 50: federbetriebener Springkontaktstift
- 52: Kontaktfläche des Springkontaktstifts 50
- 54: Feder des Springkontaktstifts 50
- 56: Ausnehmung des Dichtungskörpers 40
- 58: erste Abfolge von Herstellungsschritten
- 60: erster Schritt des ersten Herstellungsverfahrens 58
- 62: zweiter Schritt des ersten Herstellungsverfahrens 58
- 64: dritter Schritt des ersten Herstellungsverfahrens 58
- 68: vierter Schritt des ersten Herstellungsverfahrens 58
- 70: zweite Abfolge von Herstellungsschritten
- 72: erster Schritt des zweiten Herstellungsverfahrens 70
- 74: zweiter Schritt des zweiten Herstellungsverfahrens
- 76: dritter Schritt des zweiten Herstellungsverfahrens
- 78: vierter Schritt des zweiten Herstellungsverfahrens
- 80: weitere Dichtungsanordnung
- 82: Kontaktring der weiteren Dichtungsanordnung 80
- 84: Dichtungsmasse

## Patentansprüche

1. Dichtungskomponente (18), insbesondere Dichtungskomponente (18) einer Filterpatrone, insbesondere einer Luftfilterpatrone für eine Luftaufbereitungsanlage, wobei die Dichtungskomponente (18) einen Dichtungskörper (40) umfasst, der eine erste Dichtungsfläche (24) zum Abdichten eines abzudichtenden Volumens aufweist, wobei der Dichtungskörper (40) eine elektronische Komponente (22) zumindest teilweise umschließt, insbesondere zumindest teilweise formschlüssig umschließt, wobei ausgehend von der elektronischen Komponente (22) mindestens eine elektrische Verbindung (26) zu einer elektrisch leitenden Kontaktfläche (32) in einer Oberfläche (30) des Dichtungskörpers (40) herausgeführt ist, **dadurch gekennzeichnet, dass** die Kontaktfläche (32) in der Oberfläche (30) des Dichtungskörpers (40) vertieft angeordnet ist.

2. Dichtungskomponente (18) gemäß Anspruch 1, **dadurch gekennzeichnet, dass** die elektronische Komponente (22) eine Schnittstellenkomponente (26) aufweist, die dazu vorgesehen ist, ein Signal von und/oder zu einer außerhalb der Dichtungskomponente (18) angeordneten Vorrichtung zu übertragen.

3. Dichtungskomponente (18) gemäß einem der Ansprüche 1 bis 2, **dadurch gekennzeichnet, dass** der Dichtungskörper (40) eine zweite Dichtungsfläche (24) aufweist, die dazu vorgesehen ist, einen Raum abzudichten, in dem die Kontaktfläche (32) angeordnet ist.

4. Dichtungskomponente (18) gemäß einem der Ansprüche 1 bis 3, **dadurch gekennzeichnet, dass** die erste Dichtungsfläche (24) die zweite Dichtungsfläche (24) umfasst.

5. Dichtungskomponente (18) gemäß einem der Ansprüche 1 bis 4, **dadurch gekennzeichnet, dass** die zweite Dichtungsfläche (24) und/oder die elektronische Komponente (22) und/oder die Schnittstellenvorrichtung (26) vollständig in dem abzudichtenden Volumen angeordnet ist.

6. Dichtungskomponente (18) gemäß einem der Ansprüche 1 bis 4, **dadurch gekennzeichnet, dass** die zweite Dichtungsfläche (24) und/oder die elektronische Komponente (22) und/oder die Schnittstellenvorrichtung (26) nicht oder nur teilweise in dem abzudichtenden Volumen angeordnet ist.

7. Dichtungskomponente (18) gemäß einem der Ansprüche 1 bis 6, **dadurch gekennzeichnet, dass** die elektronische Komponente (22) mit einem Strukturteil (20) elektrisch verbunden und/oder an einem Strukturteil (20) mechanisch befestigt ist, wobei der Dichtungskörper (40) das Strukturteil (20) zumindest teilweise formschlüssig umschließt, insbesondere wobei das Strukturteil (20) ein leitfähiges Stanzbiegeteil (22) und/oder ein Stützkörper (20) ist.

8. Dichtungskomponente (18) gemäß einem der Ansprüche 1 bis 7, **dadurch gekennzeichnet, dass** die Dichtungskomponente (18) eine Feder umfasst, die dazu vorgesehen ist, eine Kontaktfläche (32) der Schnittstellenvorrichtung (34) gegen einen Gegenkontakt (52) einer Dichtungsgegenfläche (42) zu drücken, insbesondere wobei der Stützkörper (20) die Feder umfasst und/oder wobei die Feder die Kontaktfläche (32) umfasst.

9. Dichtungskomponente (18) gemäß einem der Ansprüche 1 bis 8, **dadurch gekennzeichnet, dass** der Dichtungskörper (40) die Schnittstellenkomponente (34) zumindest teilweise oder vollständig umschließt, insbesondere zumindest teilweise oder vollständig formschlüssig umschließt.

10. Dichtungskomponente (18) gemäß einem der Ansprüche 1 bis 9, **dadurch gekennzeichnet, dass** die elektronische Komponente (22) einen Sensor aufweist, der dazu geeignet und/oder vorgesehen ist, eine erste physikalische Messgröße zu erfassen sowie eine zweite physikalische Größe bereitzustellen, wobei die zweite physikalische Größe ein Maß für die erste physikalische Messgröße ist, wobei die zweite physikalische Größe insbesondere eine elektrische oder magnetische Größe und/oder ein elektrisches oder magnetisches Signal ist.

11. Dichtungskomponente (18) gemäß einem der Ansprüche 1 bis 10, **dadurch gekennzeichnet, dass** die elektronische Komponente (22) einen nichtflüchtigen und/oder programmierbaren und/oder irreversiblen elektrischen Speicher und/oder eine Verschlüsselungsvorrichtung und/oder eine Frage-Antwort-Vorrichtung und/oder eine Chipkartenkomponente, insbesondere einen Chipkartenchip und/oder einen Transponder aufweist.

12. Dichtungsanordnung (10), **dadurch gekennzeichnet, dass** die Dichtungsanordnung (10) eine Dichtungskomponente (18) gemäß einem der Ansprüche 1 bis 11 sowie ein Gegenstück (46) zu der Dichtungskomponente (18) umfasst, wobei die Dichtungsanordnung (10) einen geschlossenen und einen nicht geschlossenen Zustand einnehmen kann, wobei in dem geschlossenen Zustand die Kontaktfläche (32) der Dichtungskomponente (18) eine Kontaktfläche (52) des Gegenstücks (46) kontaktiert.

13. Betriebsverfahren für eine Dichtungskomponente (18), **dadurch gekennzeichnet, dass** das Betriebsverfahren folgende Schritte umfasst:
- Bereitstellen der Dichtungskomponente (18) gemäß einem der Ansprüche 1 bis 12;
- Ändern einer Information in einem elektronischen Speicher (22) der Dichtungskomponente (18);
- Abfragen der Information aus dem elektronischen Speicher (22) der Dichtungskomponente (18);
- Auswerten der abgefragten Information; und
- Durchführen einer Aktion in Abhängigkeit und/oder unter Berücksichtigung eines Auswertungsergebnisses der Auswertung der abgefragten Information.

14. Herstellungsverfahren für eine Dichtungskomponente (22), insbesondere für eine Dichtungskomponente (18) einer Luftfilterpatrone, wobei das Herstellungsverfahren folgende Schritte umfasst:
- Bereitstellen eines Dichtungsträgers (14), der einen Aufnahmebereich (16) für einen Dichtungskörper (40) aufweist;
- Anordnen einer elektronischen Komponente (22) in dem Aufnahmebereich (16) für den Dichtungskörper (40); und
- Aufvulkanisieren des Dichtungskörpers (40) auf oder in den Aufnahmebereich (16) für den Dichtungskörper (40), wobei ausgehend von der elektronischen Komponente (22) mindestens eine elektrische Verbindung (26) zu einer elektrisch leitenden Kontaktfläche (32) in einer Oberfläche (30) des Dichtungskörpers (40) herausgeführt ist, **dadurch gekennzeichnet, dass** die Kontaktfläche (32) in der Oberfläche (30) des Dichtungskörpers (40) vertieft angeordnet ist.

15. Herstellungsverfahren für eine Dichtungskomponente (18), insbesondere für eine Dichtungskomponente (18) einer Luftfilterpatrone, wobei das Herstellungsverfahren folgende Schritte umfasst:
- Anordnen einer elektronischen Komponente (18) auf einer Stützkomponente (20);
- Aufvulkanisieren eines Dichtungskörpers (40) auf die Stützkomponente (20) und die elektronische Komponente (22), wobei ausgehend von der elektronischen Komponente (22) mindestens eine elektrische Verbindung (26) zu einer elektrisch leitenden Kontaktfläche (32) in einer Oberfläche (30) des Dichtungskörpers (40) herausgeführt ist, **dadurch gekennzeichnet, dass** die Kontaktfläche (32) in der Oberfläche (30) des Dichtungskörpers (40) vertieft angeordnet ist;
- Bereitstellen eines Dichtungsträgers (14), der einen Befestigungsbereich (16) für den Dichtungskörper (40) aufweist; und
- Verbinden des Dichtungskörpers (40) und/oder der Stützkomponente (20) mit dem Befestigungsbereich (16) des Dichtungsträgers (14).

## Claims

1. Seal component (18), in particular seal component (18) of a filter cartridge, in particular an air filter cartridge for an air processing system, wherein the seal component (18) comprises a seal body (40) provided with a first sealing area (24) for sealing a volume to be sealed, wherein said seal body (40) encloses, at least partly, an electronic component (22) and encloses it, in particular, at least partly in a positive form, wherein, originating from said electronic component (22) at least one electrical connection (26) to an electrically conductive contact area (32) is led out in a surface (30) of said seal body (40), **characterized in that** said contact area (32) in said surface (30) of said seal body (40) is disposed in a recessed form..

2. Seal component (18) according to Claim 1, **characterized in that** said electronic component (22) includes an interface component (26) provided for the transmission of a signal from and/or or to a device disposed outside of said seal component (18).

3. Seal component (18) according to any of the Claims 1 to 2, **characterized in that** said seal body (40) comprises a second seal area (24) provided for sealing a space in which said contact area (32) is disposed.

4. Seal component (18) according to any of the Claims 1 to 3, **characterized in that** said first sealing area (24) encompasses said second sealing area (24).

5. Seal component (18) according to any of the Claims 1 to 4, **characterized in that** said second sealing area (24) and/or said electronic component (22) and/or said interface device (26) is/are disposed completely in said volume to be sealed.

6. Seal component (18) according to any of the Claims 1 to 4, **characterized in that** said second sealing area (24) and/or said electronic component (22) and/or said interface device (26) are/is not disposed or disposed only in parts in said volume to be sealed.

7. Seal component (18) according to any of the Claims 1 to 6, **characterized in that** said electronic component (22) is electrically connected to a structure element (20) and/or is fastened mechanically on a structure element (20), with said seal body (40) enclosing said structure element (20) at least partly in a positive manner, wherein, in particular, said structure element (20) is a conductive punched bent element (22) and/or a supporting body (20).

8. Seal component (18) according to any of the Claims 1 to 7, **characterized in that** said seal component (18) comprises a spring that is provided for pressing a contact area (32) of said interface device (34) against a counter contact (52) of a sealing counter surface (42), in particular wherein said supporting body (20) comprises said spring and/or wherein said spring comprises said contact area (32)..

9. Seal component (18) according to any of the Claims 1 to 8, **characterized in that** said seal body (40) encloses said interface component 834) at least partly or completely, in particular encloses it in a positive manner at least partly or completely.

10. Seal component (18) according to any of the Claims 1 to 9, **characterized in that** said electronic component (22) comprises a sensor that is suitable and/or provided for detecting a first physical measurands as well as for providing a second physical measurands, wherein said second physical measurands is a measure of the first physical measurands, with said second physical measurands being an electrical or magnetic parameter and/or an electrical or magnetic signal in particular.

11. Seal component (18) according to any of the Claims 1 to 10, **characterized in that** said electronic component (22) comprises a non-volatile and/or programmable and/or irreversible electrical memory and/or a coding device and/or a question/answer device and/or a chip card component, in particular a chip card chip and/or a transponder.

12. Sealing arrangement (10), **characterized in that** the sealing arrangement (10) comprises a seal component (18) according to any of the Claims 1 to 11 as well as a counterpart (46) to said seal component (18), wherein the sealing arrangement (10) may go into a closed condition and a non-closed condition, with said contact surface (32) of said seal component (18) contacting a contact surface (52) of said counterpart (46) in the closed condition.

13. Operating method for a seal component (18), **characterized in that** the operating method comprises the following steps:
- providing said seal component (18) according to any of the Claims 1 to 12;
- changing an item of information in an electronic memory (22) of said seal component (18);
- interrogating said item of information from the electronic memory (22) of said seal component (18);
- evaluating the information so interrogated; and
- performing an action as a function and/or with due consideration of a result of evaluation in the evaluation of the information so interrogated.

14. Method of manufacturing a seal component (22), in particular for a seal component (18) of an air filter cartridge, with the manufacturing method comprising the following steps:
- providing a seal support (14) comprising a receiving zone for accommodation of a seal body (40);
- disposing an electronic component (22) in said receiving zone (16) for accommodation of said seal body (40); and
- vulcanizing said seal body (40) onto or into said receiving zone (16) for accommodation of said seal body (40), wherein, originating from said electronic component (22), at least one electrical connection (26) is led out to an electrically conductive contact area (32) in a surface (30) of said seal body (40), **characterized in that** said contact area (32) is disposed in said surface (30) of said seal body (40) in a recessed form.

15. Manufacturing method for a seal component (18), in particular for a seal component of an air filter cartridge, with the manufacturing method comprising the following steps of operation:
- disposing an electronic component (18) on a supporting component (20);
- vulcanizing a seal body (40) onto said supporting component (20) and said electronic component (22), wherein, originating from said electronic component (22), at least one electrical connection (26) is lead out to an electrically conductive contact area (32) in a surface (30) of said seal body (40), **characterized in that** said contact area (32) is disposed in said surface (30) of said seal body (40) in a recessed form;
- providing a seal support (14) including a fastening zone (16) for mounting said seal body (40); and
- connecting said seal body (40) and/or said supporting component (20) with a fastening zone (16) for fastening said seal support (14).

## Revendications

1. Composant (18) d'étanchéité, notamment composant (18) d'étanchéité d'une cartouche de filtre, notamment d'une cartouche de filtre à air, pour un système de traitement de l'air, le composant (18) d'étanchéité comprenant un corps (40) d'étanchéité, qui a une première face (24) d'étanchéité pour rendre étanche un volume à rendre étanche, le corps (40) d'étanchéité entourant, au moins en partie, un composant (22) électronique, en l'entourant notamment au moins en partie à complémentarité de forme, dans lequel, à partir du composant (22) électronique, au moins une liaison (26) électrique vers une face (32) de contact conductrice de l'électricité sort dans une surface (30) du corps (40) d'étanchéité, **caractérisé en ce que** la face (32) de contact est en retrait dans la surface (30) du corps (40) d'étanchéité.

2. Composant (18) d'étanchéité suivant la revendication 1, **caractérisé en ce que** le composant (22) électronique comporte un composant (26) d'interface prévu pour transmettre un signal d'un dispositif et/ou à un dispositif disposé à l'extérieur du composant (18) d'étanchéité.

3. Composant (18) d'étanchéité suivant l'une des revendications 1 à 2, **caractérisé en ce que** le corps (40) d'étanchéité a une deuxième face (24) d'étanchéité prévue pour rendre étanche un espace, dans lequel la face (32) de contact est disposée.

4. Composant (18) d'étanchéité suivant l'une des revendications 1 à 3, **caractérisé en ce que** la première face (24) d'étanchéité comprend la deuxième face (24) d'étanchéité.

5. Composant (18) d'étanchéité suivant l'une des revendications 1 à 4, **caractérisé en ce que** la deuxième face (24) d'étanchéité et/ou le composant (22) électronique et/ou le dispositif (26) d'interface sont disposés entièrement dans le volume à rendre étanche.

6. Composant (18) d'étanchéité suivant l'une des revendications 1 à 4, **caractérisé en ce que** la deuxième face (24) d'étanchéité et/ou le composant (22) électronique et/ou le dispositif (26) d'interface ne sont pas disposés ou ne sont disposés qu'en partie dans le volume à rendre étanche.

7. Composant (18) d'étanchéité suivant l'une des revendications 1 à 6, **caractérisé en ce que** le composant (22) électronique est relié électriquement à une partie (20) de structure et/ou est fixé mécaniquement à une partie (20) de structure, le corps (40) d'étanchéité entourant, au moins en partie, à complémentarité de forme la partie (20) de structure, la partie (20) de structure étant, notamment, une partie (22) découpée et pliée et/ou une pièce (20) d'appui.

8. Composant (18) d'étanchéité suivant l'une des revendications 1 à 7, **caractérisé en ce que** le composant (18) d'étanchéité comprend un ressort prévu pour repousser une face (32) de contact du dispositif (34) d'interface sur un contact (52) antagoniste d'une face (42) antagoniste d'étanchéité, la pièce (20) d'appui comprenant, notamment, le ressort et/ou le ressort comprenant la face (32) de contact.

9. Composant (18) d'étanchéité suivant l'une des revendications 1 à 8, **caractérisé en ce que** le corps (40) d'étanchéité entoure, au moins en partie ou complètement, le composant (34) d'interface en l'entourant à complémentarité de forme, au moins en partie ou complètement.

10. Composant (18) d'étanchéité suivant l'une des revendications 1 à 9, **caractérisé en ce que** le composant (22) électronique comporte un capteur propre à et/ou prévu pour détecter une première grandeur de mesure physique ainsi que pour mettre à disposition une deuxième grandeur physique, la deuxième grandeur physique étant une mesure de la première grandeur physique, la deuxième grandeur physique étant, notamment, une grandeur électrique ou magnétique et/ou un signal électrique ou magnétique.

11. Composant (18) d'étanchéité suivant l'une des revendications 1 à 10, **caractérisé en ce que** le composant (22) électronique comporte une mémoire électrique rémanente et/ou programmable et/ou irréversible et/ou un dispositif de chiffrement et/ou un dispositif interrogation-réponse et/ou un composant à carte à puce, notamment une puce de carte à puce et/ou un transpondeur.

12. Dispositif (10) d'étanchéité, **caractérisé en ce que** le dispositif (10) d'étanchéité comprend un composant (18) d'étanchéité suivant l'une des revendications 1 à 11 ainsi qu'une pièce (46) antagoniste du composant (18) d'étanchéité, le dispositif (10) d'étanchéité pouvant prendre un état fermé et un état non fermé, dans lequel, dans l'état fermé, la face (32) de contact du composant (18) d'étanchéité est en contact avec une face (52) de contact de la pièce (46) antagoniste.

13. Procédé pour faire fonctionner un composant (18) d'étanchéité, **caractérisé en ce que** le procédé comprend les stades suivants :
- on se procure le composant (18) d'étanchéité suivant l'une des revendications 1 à 12 ;
- on modifie une information dans une mémoire (22) électronique du composant (18) d'étanchéité ;
- on extrait de l'information de la mémoire (22) électronique du composant (18) d'étanchéité ;
- on exploite l'information extraite ; et
- on effectue une action en fonction et/ou en tenant compte d'un résultat de l'exploitation de l'information extraite.

14. Procédé de fabrication d'un composant (18) d'étanchéité, notamment d'un composant (18) d'étanchéité d'une cartouche de filtre à air, le procédé de fabrication comprenant les stades suivants :
- on se procure un support (14) d'étanchéité, qui a une zone (16) de réception d'un corps (40) d'étanchéité ;
- on met un composant (22) électronique dans la zone (16) de réception du corps (40) d'étanchéité ; et
- on vulcanise le corps (40) d'étanchéité sur ou dans la zone (16) de réception du corps (40) d'étanchéité, dans lequel, à partir du composant (22) électronique, au moins une liaison (26) électrique vers une face (32) de contact conductrice de l'électricité sort dans une surface (30) du corps (40) d'étanchéité, **caractérisé en ce que** la face (32) de contact est disposée en retrait dans la surface (30) du corps (40) d'étanchéité.

15. Procédé de fabrication d'un composant (18) d'étanchéité, notamment d'un composant (18) d'étanchéité d'une cartouche de filtre à air, dans lequel le procédé de fabrication a les stades suivants :
- on met un composant (22) électronique sur un composant (20) d'appui ;
- on vulcanise un corps (40) d'étanchéité sur le composant (20) d'appui et sur le composant (22) électronique, dans lequel, à partir du composant (22) électronique, au moins une liaison (26) électrique vers une face (32) de contact conductrice de l'électricité sort dans une surface (30) du corps (40) d'étanchéité, **caractérisé en ce que** la face (32) de contact est disposée en retrait dans la surface (30) du corps (40) d'étanchéité.
